# EUROPEAN PATENT SPECIFICATION

(11) **EP 3 724 035 B1**
(45) Date of publication and mention of the grant of the patent: **05.03.2025**
(21) Application number: 18821758.2
(22) Date of filing: 26.10.2018
(51) Int. Cl.: F16B 7/04

(54) **DEVICE FOR KEEPING BICYCLES ON A BICYCLE-HOLDER**
VORRICHTUNG ZUM HALTEN VON FAHRRÄDERN AUF EINEM FAHRRADHALTER
DISPOSITIF PERMETTANT DE MAINTENIR DES VÉLOS SUR UN PORTE-VÉLO

(30) Priority: 14.12.2017 IT 201700143985 U
(43) Date of publication of application: 21.10.2020
(73) Proprietor: Aurilis Group Italia S.R.L., 12045 Fossano (CN) (IT)
(72) Inventor: GEMESIO, Matteo, 12045 Fossano (CN) (IT)
(74) Representative: Garavelli, Paolo
(86) International application number: PCT/IT2018/000139
(87) International publication number: WO 2019/116402

(56) References cited:
- WO-A1-2014/096346
- FR-A1- 3 012 093
- US-A- 5 775 555
- US-A- 5 996 870

## Description

The present invention refers to a device for keeping bicycles on a bicycle-holder, in particular a bicycle-holder for motor vehicles, for example of the type configured to be assembled projecting from the rear part of a motor vehicle, fastened to a towing hook.

In particular, the invention refers to a device for keeping a bicycle in a vertical position, configured to be fastened to the frame of a bicycle and to the frame of the bicycle-holder, in order to allow easily fastening it by a single person.

Devices for keeping bicycles on a bicycle-holder are known in the art, comprising a bar equipped at its two ends with catching means for assembling the device between a frame of the bicycle-holder and the bicycle, and with tensioning means of the catching means, which keep said catching means tightened.

Devices for keeping bicycles are known and comprise a bar equipped at its two ends with first catching means for its fastening to the frame of the bicycle-holder, and with second catching means configured for blocking the device to a frame of a bicycle in order to keep the bicycle on the bicycle-holder, the first catching means comprising two jaws configured to be tightened around the frame of the bicycle-holder, and the second catching means comprising two arms configured to be tightened around the frame of a bicycle for keeping a bicycle in a vertical position on the bicycle-holder. Document US5775555A discloses such a similar bicycle-holder.

These known devices for keeping bicycles, however, are not satisfactory and have the problem that, when they are used with bicycles with very big section of the frame (for example e-bikes), they do not allow completely closing the two arms around the bicycle frame, preventing it from being completely safely kept on the bicycle-holder.

Object of the present invention is solving the above prior art problems by providing a device for keeping bicycles on a bicycle-holder which allows completely safely closing the bicycle frame with the catching means also when the bicycle has a very big-sized frame, allowing a safe catch on the bicycle-holder and on the bicycle.

The above and other objects and advantages of the invention, as will appear from the following description, are obtained with a device for keeping bicycles on a bicycle-holder as claimed in Claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the present invention as appears from the enclosed claims.

The present invention will be better described by some preferred embodiments thereof, provided as a non-limiting example, with reference to the enclosed drawings, in which:

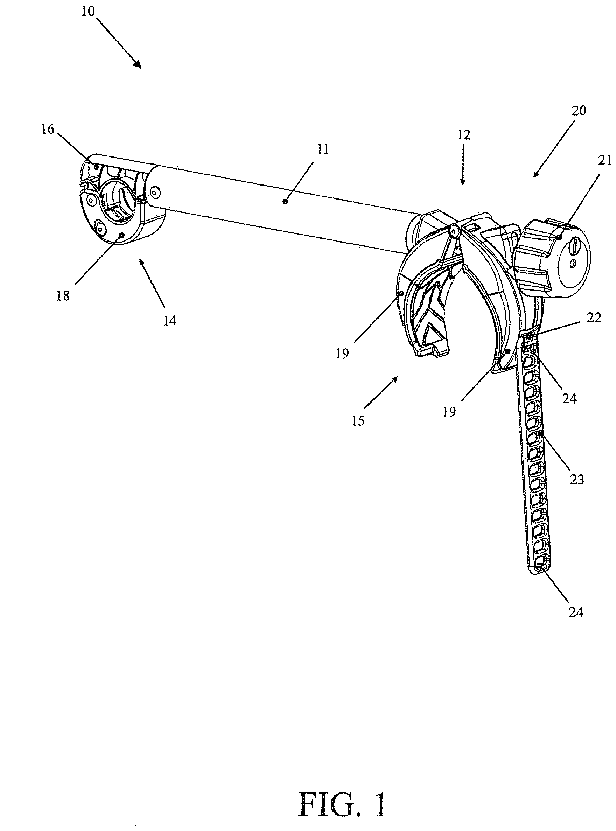

- Figure 1 is a perspective view of an embodiment of a device for keeping bicycles according to the present invention; and

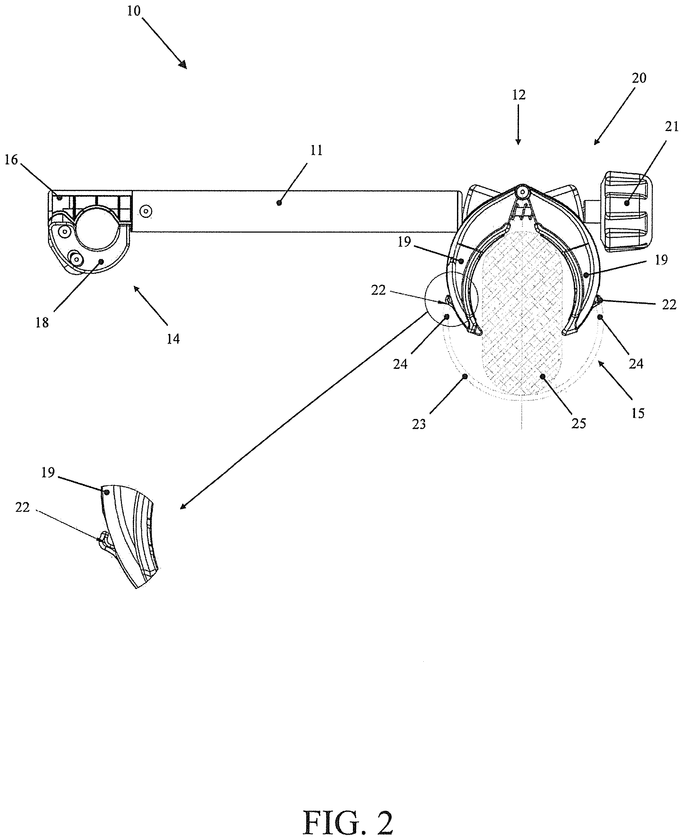

- Figure 2 is a front view of an embodiment of a device for keeping bicycles according to the present invention.

With reference to the Figures, the device 10 for keeping bicycles on a bicycle-holder according to the present invention comprises a bar 11 having a first end connected to first catching means 14 configured for blocking the device 10 to a frame of the bicycle-holder, and a second end connected to second catching means 15 configured for blocking the device 10 to a frame 25 of a bicycle.

The device 10 for keeping bicycles further comprises fastening means 23 connected to the second catching means 15 and configured for blocking them on the frame 25 of the bicycle for keeping the bicycle on the bicycle-holder, preferably in a vertical position.

According to the invention the fastening means 23 of the frame are connected to the second catching means 15 by means of a connecting element 22, for example an engagement-type connecting element 22 to which the fastening means 23 of the frame are secured.

According to the invention the fastening means 23 of the frame comprise a strap or belt 23 connected to the connecting element 22, for example comprising a hook 22 to which an end of the strap or belt 23 is connected in engagement, in a preferred way connected to the hook 22 with a ring end 24 of the strap or belt 23.

The device 10 for keeping bicycles preferably comprises actuating means 20 of a known type, connected to the first catching means 14 and to the second catching means 15 and configured for closing and blocking them respectively on the frame of the bicycle-holder and on the frame of the bicycle in order to keep the bicycle on the bicycle-holder, preferably in a vertical position.

In a preferred way, the actuating means 20 are configured for simultaneously closing the first catching means 14 and the second catching means 15 and for keeping them tightened for blocking them respectively on the frame of the bicycle-holder and on the frame of the bicycle.

In an embodiment of the invention, the first catching means 14 comprise a first jaw 16 and a second jaw 18 configured to be closed by the actuating means 20, for example a first jaw 16 fastened to the bar 11, and a second mobile jaw 18 configured to be closed against the first fixed jaw 16.

According to the invention, the second catching means 15, of a known type comprise two arms 19, for example of a pliers element 12 comprising the two arms 19 hinged at an end thereof; According to the invention the two arms 19 each comprise a connecting element 22.

According to an embodiment of the invention, the actuating means 20 comprise a fitting element of a known type connected to the second mobile jaw mobile 18 and configured for actuating it in rotation, generating the closure of the first catching means 14 on the frame of the bicycle-holder.

In a preferred way, the actuating means 20 further comprise a knob 21 connected to the fitting element and configured for actuating the first catching means 14 through the fitting element.

Preferably, the knob 21 is assembled in contact with the pliers element 12, preferably with its arms 19, in order to close it by pressing the arms 19 against the bar 11, simultaneously closing the first catching means 14.

In a preferred embodiment of the invention, the fastening means 23 of the frame 25 are connected to the arms 19 of the second catching means 15; for example, the fastening means 23 comprise a strap or belt 23 connected to the connecting element 22, for example comprising a hook 22 fastened to the arm 19, to which an end of the strap or belt 23 is connected in engagement; in a preferred way, the strap or belt 23 comprises two ring ends 24, each connected to a respective hook 22 fastened to a respective arm 19.

Preferably, the device 10 for keeping bicycles of the invention comprises an anti-theft closing device.

Advantageously, the device for keeping bicycles on a bicycle-holder of the invention, due to the fastening means 23, in particular to the strap or belt 23, which operate as extension of the second catching means 15, in particular of the pliers element 12 and of its arms 19, allows completely safely closing the frame 25 of a bicycle with a very big section, such as for example an e-bike, and allows keeping the catching means blocked, in order to anyway have a safe catch on the bicycle, keeping it fastened on the bicycle-holder.

## Claims

1. Device (10) for keeping bicycles in a vertical position, configured to be fastened to a frame of a bicycle and to a frame on a bicycle-holder for motor vehicles of the type configured to be assembled projecting from a rear part of a motor vehicle, the device (10) comprising:
- a bar (11) having a first end connected to first catching means (14) configured for blocking the device (10) on a frame of the bicycle-holder, and a second end connected to second catching means (15) configured for blocking the device (10) on a frame (25) of a bicycle;
- **characterized in that** it comprises fastening means (23) connected to the second catching means (15) and configured for blocking them on the frame (25) of the bicycle by completely closing the frame (25) through both the catching means (15) and the fastening means (23), for keeping the bicycle on the bicycle-holder, and
**in that** the fastening means (23) of the frame are connected to the second catching means (15) by means of a connecting element (22), the fastening means (23) of the frame comprising a belt (23), the second catching means (15) comprising two arms (19), and the two arms (19) each comprise a connecting element (22).

2. Device (10) for keeping bicycles on a bicycle-holder according to claim 1, **characterized in that** the connecting element (22) comprises a hook (22) to which an end of the belt (23) is connected in engagement.

3. Device (10) for keeping bicycles on a bicycle-holder according to claim 2, **characterized in that** the strap or belt (23) comprises a ring end (24) connected to the hook (22).

4. Device (10) for keeping bicycles on a bicycle-holder according to claim 1, **characterized in that** the fastening means (23) of the frame (25) are connected to the arms (19) of the second catching means (15).

5. Device (10) for keeping bicycles on a bicycle-holder according to claim 1 or 4, **characterized in that** the connecting element (22) comprises a hook (22) fastened to the arm (19), to which an end of the belt (23) is connected in engagement.

6. Device (10) for keeping bicycles on a bicycle-holder according to claim 5, **characterized in that** the belt (23) comprises two ring ends (24), each connected to a respective hook (22) fastened to a respective arm (19).

7. Device (10) for keeping bicycles on a bicycle-holder according to any one of the previous claims, **characterized in that** it comprises an anti-theft closing device.

## Patentansprüche

1. Vorrichtung (10) zum Halten von Fahrrädern in einer aufrechten Position, konfiguriert zum Befestigen an einem Fahrradrahmen und an einem Rahmen eines Fahrradträgers eines Kraftfahrzeugs, der so konfiguriert ist, dass er von einem hinteren Teil eines Kraftfahrzeugs abstehend montiert werden kann, die Vorrichtung (10), umfassend:
- eine Stange (11), deren erstes Ende mit ersten Greifmitteln (14) verbunden ist, die konfiguriert sind, um die Vorrichtung (10) an einem Rahmen des Fahrradträgers zu verriegeln, und deren zweites Ende mit zweiten Greifmitteln (15) verbunden ist, die konfiguriert sind, um sie zu verriegeln Vorrichtung (10) an einem Rahmen (25) eines Fahrrads;
- **dadurch gekennzeichnet, dass** es Befestigungsmittel (23) umfasst, die mit den zweiten Griffmitteln (15) verbunden und so konfiguriert sind, dass sie am Rahmen (25) des Fahrrads befestigt werden, indem der Rahmen (25) durch beide Griffmittel (15) vollständig geschlossen wird und die Befestigungsmittel (23), um das Fahrrad am Fahrradträger zu halten,
und dadurch, dass die Befestigungsmittel (23) des Rahmens über ein Verbindungselement (22) mit den zweiten Greifmitteln (15) verbunden sind, wobei die Befestigungsmittel (23) des Rahmens einen Riemen (23) umfassen, wobei die zweiten Greifmittel (15) zwei Arme (19) umfassen und die beiden Arme (19) jeweils ein Verbindungselement (22) umfassen.

2. Vorrichtung (10) zum Halten von Fahrrädern an einem Fahrradträger nach Anspruch 1, **dadurch gekennzeichnet, dass** das Verbindungselement (22) einen Haken (22) umfasst, mit dem ein Ende des Riemens (23) durch Formschluss verbunden ist.

3. Vorrichtung (10) zum Halten von Fahrrädern an einem Fahrradträger nach Anspruch 2, **dadurch gekennzeichnet, dass** das Band oder der Riemen (23) einen mit dem Haken (22) verbundenen Ringende (24) aufweist.

4. Vorrichtung (10) zum Halten von Fahrrädern auf einem Fahrradträger nach Anspruch 1, **dadurch gekennzeichnet, dass** die Befestigungsmittel (23) des Rahmens (25) mit den Armen (19) der zweiten Greifmittel (15) verbunden sind.

5. Vorrichtung (10) zum Halten von Fahrrädern an einem Fahrradträger nach Anspruch 1 oder 4, **dadurch gekennzeichnet, dass** das Verbindungselement (22) einen am Arm (19) befestigten Haken (22) aufweist, mit dem es einenends verbunden ist des Riemens (23).

6. Vorrichtung (10) zum Halten von Fahrrädern auf einem Fahrradträger nach Anspruch 5, **dadurch gekennzeichnet, dass** der Riemen (23) zwei Ringenden (24) aufweist, die jeweils mit einem jeweiligen Haken (22) verbunden sind, der an einem jeweiligen Arm (19) befestigt ist.

7. Vorrichtung (10) zum Befestigen von Fahrrädern auf einem Fahrradträger nach einem der vorhergehenden Ansprüche, **dadurch gekennzeichnet, dass** sie eine diebstahlsichere Verriegelungsvorrichtung umfasst.

## Revendications

1. Dispositif (10) de maintien de bicyclettes en position verticale, configuré pour être fixé à un cadre de bicyclette et à un châssis d'un porte-vélos de véhicule automobile du type configuré pour être assemblé en saillie d'une partie arrière d'un véhicule automobile, le dispositif (10) comprenant:
- une barre (11) ayant une première extrémité reliée à des premiers moyens de préhension (14) configurés pour verrouiller le dispositif (10) à un cadre du porte-vélos, et une seconde extrémité reliée à des seconds moyens de préhension (15) configurés pour verrouiller le dispositif (10) sur un cadre (25) d'une bicyclette;
- **caractérisé par le fait qu'**il comprend des moyens de fixation (23) reliés aux deuxièmes moyens de préhension (15) et configurés pour les verrouiller sur le cadre (25) du vélo en fermant complètement le cadre (25) grâce aux deux moyens de préhension (15) et les moyens de fixation (23), pour maintenir le vélo sur le porte-vélo,
et **par le fait que** les moyens de fixation (23) du cadre sont reliés aux seconds moyens de préhension (15) au moyen d'un élément de liaison (22), les moyens de fixation (23) du cadre comprenant une sangle (23), les seconds moyens de préhension (15) comprenant deux bras (19), et les deux bras (19) comprenant chacun un élément de liaison (22).

2. Dispositif (10) de maintien de vélos sur un porte-vélos selon la revendication 1, **caractérisé en ce que** l'élément de liaison (22) comprend un crochet (22) auquel une extrémité de la sangle (23) est reliée par emboîtement.

3. Dispositif (10) de maintien de vélos sur un porte-vélos selon la revendication 2, **caractérisé en ce que** la bande ou sangle (23) comprend une extrémité d'anneau (24) reliée au crochet (22).

4. Dispositif (10) de maintien de vélos sur un porte-vélos selon la revendication 1, **caractérisé en ce que** les moyens de fixation (23) du cadre (25) sont reliés aux bras (19) des seconds moyens de préhension (15).

5. Dispositif (10) de maintien de vélos sur un porte-vélos selon la revendication 1 ou 4, **caractérisé en ce que** l'élément de liaison (22) comprend un crochet (22) fixé au bras (19), auquel il est relié par une extrémité de la ceinture (23).

6. Dispositif (10) de maintien de vélos sur un porte-vélos selon la revendication 5, **caractérisé en ce que** la sangle (23) comprend deux extrémités d'anneaux (24) reliées chacune à un crochet respectif (22) fixé à un bras respectif (19).

7. Dispositif (10) de retenue de vélos sur un porte-vélos selon l'une quelconque des revendications précédentes, **caractérisé en ce qu'**il comprend un dispositif de verrouillage antivol.
